# EUROPÄISCHE PATENTSCHRIFT

(11) **EP 1 910 195 B1**
(45) Veröffentlichungstag und Bekanntmachung des Hinweises auf die Patenterteilung: **21.04.2010**
(21) Anmeldenummer: 05817853.4
(22) Anmeldetag: 23.11.2005
(51) Int. Cl.: B65G 43/02

(54) **EINRICHTUNG ZUR ÜBERWACHUNG EINER FÖRDERANLAGE**
DEVICE FOR MONITORING A CONVEYOR
DISPOSITIF POUR SURVEILLER UNE INSTALLATION DE TRANSPORT

(30) Priorität: 25.06.2005 DE 102005029637
(43) Veröffentlichungstag der Anmeldung: 16.04.2008
(73) Patentinhaber: Phoenix Conveyor Belt Systems GmbH, 07422 Bad Blankenburg (DE)
(72) Erfinder: KÜSEL, Bernd, 21077 Hamburg (DE)
(74) Vertreter: Finger, Karsten
(86) Internationale Anmeldenummer: PCT/DE2005/002094
(87) Internationale Veröffentlichungsnummer: WO 2007/000123

(56) Entgegenhaltungen:
- WO-A-2005/023688
- DE-A1- 19 532 010

## Beschreibung

Die Erfindung betrifft eine Einrichtung zur Überwachung einer Förderanlage, umfassend:
- einen Fördergurt aus elastomerem Werkstoff mit einer Tragseite für das Fördermaterial und einer Laufseite, wobei der Fördergurt insbesondere einen eingebetteten Festigkeitsträger (z.B. Stahlseile, Gewebe) aufweist;
- ein opto-elektronisches System, das die Tragseite und/oder Laufseite, insbesondere die Tragseite optisch erfasst, indem es Schäden während des Betriebes erkennt und bei Erreichen eines kritischen Zustandes des Fördergurtes einen akustischen und/oder optischen Warnmelder auslöst und/oder insbesondere eine automatische Abschaltung der Förderanlage bewirkt;
- einen Prozessrechner, der mit dem opto-elektronischen System gekoppelt ist, zwecks Auswertung aller Daten, wobei der Prozessrechner mit dem Warnmelder und/oder einer Antriebssteuerung in Verbindung steht; sowie
- sonstige Anlagenteile, nämlich Anlagetrommeln (Antriebs-, Umkehr-, Umlenktrommel), Tragrollen, Traggerüste sowie gegebenenfalls weitere Bauteile.

Da Fördergurte in Minenanlagen oft die wichtigsten Teile der Anlage darstellen, deren Versagen häufig einen kompletten Produktionsstillstand bedeuten kann, werden Verfahren zur automatischen, kontinuierlichen Überwachung der Fördergurte verlangt. Neben den bekannten Verfahren der Schlitzüberwachung (DE 44 44 264 C2) und der Verbindungsüberwachung (EP 1 053 447 B1) sind auch Methoden zur Überwachung der gesamten Gurtoberfläche gefragt, um Verschleißschäden oder oberflächliche Beaufschiagungsschäden und deren Weiterentwicktung während des Betriebes zu erkennen und bei Erreichen eines kritischen Zustandes den Gurt still zu setzen, um rechtzeitig Reparaturmaßnahmen einzuleiten.

Zur Erreichung dieses Zieles wurde der Einsatz opto-elektronischer Systeme, insbesondere in Form elektronischer Kamerasysteme (Zeilenkamera oder Flächenkamera), vorgeschlagen, wobei insbesondere auf folgenden Stand der Technik verwiesen wird:
DE 100 29 545 A1
DE 101 00 813 A1
DE 101 29 091 A1
DE 101 40 920 A1
EP 1 187 781 B1
EP 1 222 126 B1
WO 2005/023688 A1

Diese opto-elektronischen Systeme generieren Bilder von der zu überwachenden Gurtoberfläche, insbesondere die der Tragseite, verbunden mit einer automatischen Auswertung und Beurteilung der so gewonnenen Bildinformation. Um eine wirksame automatische Überwachung des gesamten Gurtes durchführen zu können, ist ferner die millimetergenaue Lokalisierung jeder beliebigen Stelle des Gurtes entwickelt worden, da nur so mit Hilfe automatischer Bildverarbeitungssoftware eine Verfolgung der Schadensentwicklung über einen gewissen Zeitraum bewerkstelligt werden kann (WO 2005/023688 A1).

In der Offenlegungsschrift DE 195 32 010 A1 wird ein Verfahren zur Überwachung des Zustands des Fördergurts eines Gurtförderers vorgestellt, wobei während des laufenden Betriebs der Körperschall des Traggerüstes durch wenigstens einen Körperschallsensor aufgenommen und an eine Auswerteeinheit weitergeleitet wird.

Die für die Erkennung von Beschädigungen eines Fördergurtes eingesetzten opto-elektronischen Überwachungssysteme und Auswertungseinheit können jedoch dort Beschränkungen haben, wo Beschädigungen (z.B. Einkerbungen, Risse, Löcher) durch Fördermaterial ausgefüllt sind. Dies kann insbesondere bei feinem klebrigem Material der Fall sein, das durch einfache Abstreifer nicht entfernt wird.

Um derartige mögliche Lücken in der automatischen Überwachung zu kompensieren, zeichnet sich die neue Einrichtung gemäß Kennzeichen des Patentanspruches 1 dadurch aus, dass die Einrichtung zusätzlich mit wenigstens einem Körperschallsensor ausgerüstet ist, der in einer Bohrung einer Anlagetrommel und/oder einer Tragolle kraftschlüssig verankert ist und Abweichungen von der Soll-Frequenz erfasst, wobei ein Prozessrechner, der mit dem Körperschallsensor gekoppelt ist, die Frequenzänderung auswertet, und zwar unter gleichzeitiger Abgleichung mit den Meldungen des opto-elektronischen Systems, so dass auch in dem Fall, wenn das opto-elektronische System selbst keinen kritischen Zustand meldet, ein akustischer und/oder optischer Warnhinweis und/oder insbesondere eine automatische Abschaltung der Förderanlage bewirkt wird, indem der für den Körperschallsensor zuständige Prozessrechner ebenfalls mit einem-Warnmeider und/oder der Antriebssteuerung in Verbindung steht.

Zweckmäßige Ausgestaltungen der erfindungsgemäßen Einrichtung sind in den Patentansprüchen 2 bis 8 genannt.

Die Erfindung wird nun anhand eines Ausführungsbeispieles unter Bezugnahme auf schematische Zeichnungen erläutert. Es zeigen:
- Fig. 1: eine Seitenansicht einer Förderanlage mit Körperschallsensor im Bereich der Umkehrtrommel;
- Fig. 2: das Funktionsprinzip von opto-elektronischem System, Körperschallsensor, Prozessrechner sowie Warnmelder und Antriebssteuerung.

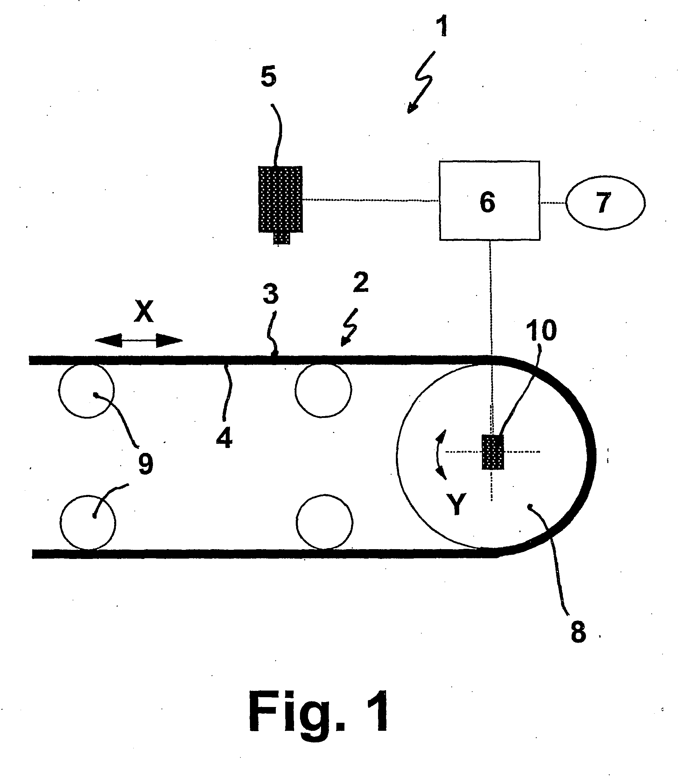

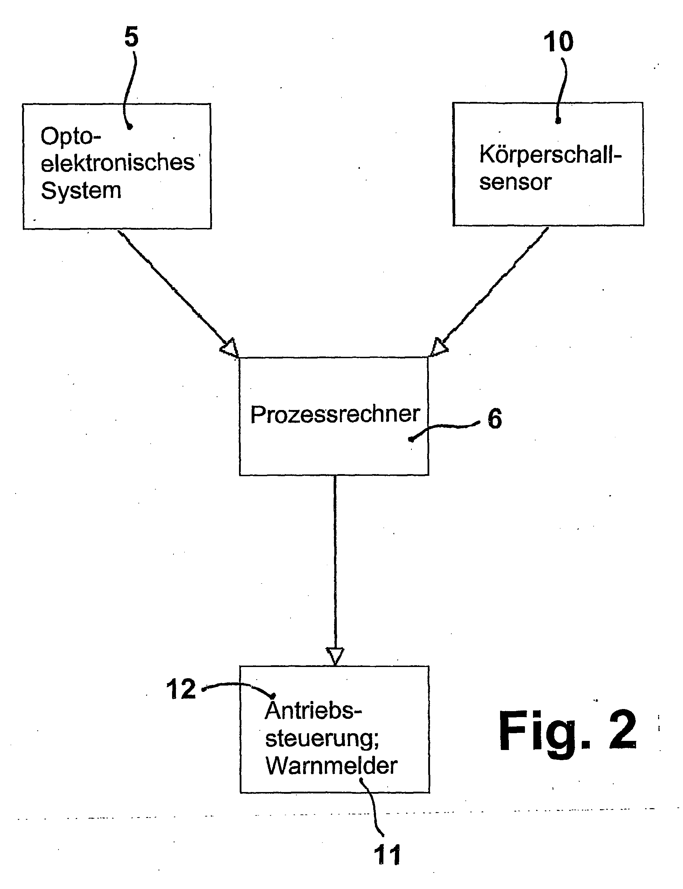

Nach Fig. 1 umfasst die Förderanlage **1** einen Fördergurt **2** aus elastomerem Werkstoff mit einer Tragseite **3** und Laufseite **4.** Das opto-elektronische System **5** erfasst optisch die Tragseite des Fördergurtes. Ein Prozessrechner **6,** der mit dem opto-elektronischen System gekoppelt ist, wertet die Daten aus, wobei der Prozessrechner mit einem Warnmelder **11** (Fig. 2) und einer Antriebssteuerung **12** (Fig. 2) in Verbindung steht.

In einer Bohrung der Umkehrtrommel **8,** und zwar innerhalb des Trommelmittelpunktes, ist nun ein Körperschallsensor **10** angeordnet.

Der Körperschallsensor **10** wird vorzugsweise in der Nähe der opto-elektronischen Systems **5** installiert. Der Sensor enthält keine bewegliche Masse, so dass es keine im Bereich üblicher Maschinenfrequenzen liegende Resonanz gibt. Der Sensor besteht vorzugsweise aus mehreren Schichten Piezokeramik. Piezokeramik wandelt Druck in elektrische Spannung um, die grafisch, beispielsweise als Frequenzlinien, dargestellt werden kann. Das Sensorsignal 7 ist proportional zu den einwirkenden Druckkräften. Der Sensor arbeitet üblicherweise ohne Stromversorgung und ist praktisch verschleißfrei. Er ist sehr klein und kann problemlos in die Umkehrtrommel **8** oder eine andere Anlagetrommel eingebaut werden. Der von dem Körperschallsensor gemessene Schwingungsverlauf wird an einen Prozessrechner **6** übertragen. Dies ist zweckmäßigerweise derselbe Prozessrechner, der auch vom opto-elektronischen System **5** verwendet wird (Fig. 2). Dies gilt auch für die gemeinsame Verwendung des Warnmelders **11** (Fig. 2).

Nach der Installation des Körperschallsensors **10** wird während einer "Lernfahrt" der für den Fördergurt 3 typische Frequenzbereich ermittelt und als Normalwert gespeichert.

Während des Überwachungsbetriebes werden Abweichungen von der Soll-Frequenz, die auf eine Beschädigung des Fördergurtes **2** hinweisen, automatisch mit den Meldungen des opto-elektronischen Systems **5** abgeglichen. Sofern das opto-elektronische System an dieser Stelle keinen Fehler meldet und es somit einen Konflikt zwischen beiden Systemen gibt, werden ein Warnhinweis und/oder insbesondere eine automatische Abschaltung ausgelöst. In diesem Fall ist eine nähere Untersuchung der gefundenen Stelle erforderlich.

Nach dem bisherigen Stand der Technik ist eine "Stand-atone-Anwendung" als Fördergurtüberwachung bislang nicht möglich, weil die Frequenz keine eindeutige Aussage über die Qualität von Ereignissen gibt. Mit dieser Konzeption ist es jedoch möglich geworden, dass durch eine Verfeinerung von Auswertungsprogrammen für jede Beschädigungsart und Beschädigungsschwere charakteristische Frequenzen erkennbar werden, die entsprechende Reaktionen, also beispielsweise Abschaltung des Antriebes der Förderanlage, zur Folge haben. Insbesondere unter diesem Aspekt kann der Einsatz von mehreren Körperschallsensoren am selben Bauteil (z.B. Umkehrtrommel) sinnvoll sein.

Ein weiterer Vorteil des Körperschallsensors ist die Möglichkeit, eine Schadensstelle zu lokalisieren. Die Frequenzlinien können bestimmten Ereignissen zugeordnet werden. Zum Beispiel erzeugt eine in jedem Fördergurt vorhandene Verbindung ein anderes Frequenzprofil als der eigentliche Gurt. Dieser Punkt kann als Nullpunkt gesetzt werden. Die Intervalle werden rechnerisch in kleine Segmente eingeteilt, so dass jede Schadensstelle einem bestimmten longitunalen Punkt im Fördergurt zugeordnet werden kann.

Alternativ kann ein Körper, der eine auffällige Frequenz im Körperschallsensor erzeugt, in den Fördergurt einvulkanisiert werden.

Ansonsten können die bisher bekannten Förderanlagen, die ein opto-elektronisches System gemäß dem eingangs zitierten Stand der Technik umfassen, ohne aufwendige Zusatzmaßnahmen mit dem Körperschallsensor ausgestattet werden. So kann beispielsweise im Hinblick auf die millimetergenaue Schadenslokalisierung die Technologie gemäß WO 2005/023668 A1 angewandt werden, indem in die in dieser Druckschrift offenbarten Anlagenkonstruktionen der Körperschallsensor integriert wird.

### Bezugszeichenliste

- **1**: Förderanlage
- **2**: Fördergurt
- **3**: Tragseite
- **4**: Laufseite
- **5**: opto-elektronisches System
- **6**: Prozessrechner (Prozessrechnereinheit)
- **7**: Sensorsignal
- **8**: Anlagetrommel (Umkehrtrommel)
- **9**: Tragrollen
- **10**: Körperschallsensor
- **11**: Warnmelder (Warnmeldereinheit)
- **12**: Antriebssteuerung
- X: Laufrichtung des Fördergurtes
- Y: Drehrichtung der Anlagetrommel (Umkehrtrommel)

## Patentansprüche

1. Einrichtung zur Überwachung einer Förderanlage (1), umfassend:
- einen Fördergurt (2) aus elastomerem Werkstoff mit einer Tragseite (3) für das Fördermaterial und einer Laufseite (4), wobei der Fördergurt insbesondere einen eingebetteten Festigkeitsträger aufweist;
- ein opto-elektronisches System (5), das die Tragseite (3) und/oder Laufseite (4), insbesondere die Tragseite optisch erfasst, indem es Schäden während des Betriebes erkennt und bei Erreichen eines kritischen Zustandes des Fördergurtes einen akustischen und/oder optischen Warnmelder (11) auslöst und/oder insbesondere eine automatische Abschaltung der Förderanlage bewirkt;
- einen Prozessrechner (6), der mit dem opto-elektronischen System (5) gekoppelt ist, zwecks Auswertung aller Daten, wobei der Prozessrechner mit dem Warnmelder (11) und/oder einer Antriebssteuerung (12) in Verbindung steht; sowie
- sonstige Anlagenteile, nämlich Anlagetrommeln (8), Tragrollen (9), Traggerüste sowie gegebenenfalls weitere Bauteile;
**dadurch gekennzeichnet, dass** die Einrichtung zusätzlich mit wenigstens einem Körperschallsensor (10) ausgerüstet ist, der in einer Bohrung einer Anlagetrommel (8) und/oder einer Tragolle (9) kraftschlüssig verankert ist und Abweichungen von der Soll-Frequenz erfasst, wobei ein Prozessrechner (6), der mit dem Körperschallsensor gekoppelt ist, die Frequenzänderung auswertet, und zwar unter gleichzeitiger Abgleichung mit den Meldungen des opto-elektronischen Systems (5), so dass auch in dem Fall, wenn das opto-elektronische System selbst keinen kritischen Zustand meldet, ein akustischer und/oder optischer Warnhinweis und/oder insbesondere eine automatische Abschaltung der Förderanlage bewirkt wird, indem der für den Körperschallsensor zuständige Prozessrechner ebenfalls mit einem Warnmelder (11) und/oder der Antriebssteuerung (12) in Verbindung steht.

2. Einrichtung nach Anspruch 1, **dadurch gekennzeichnet, dass** der Körperschallsensor (10) in der Nähe des opto-elektronischen Systems (5) angeordnet ist.

3. Einrichtung nach Anspruch 1 oder 2, **dadurch gekennzeichnet, dass** die Bohrung innerhalb des Mittelpunktes der Anlagetrommel (8) und/oder der Tragrolle (9) angeordnet ist.

4. Einrichtung nach einem der Ansprüche 1 bis 3, **dadurch gekennzeichnet, dass** der Körperschallsensor (10) in einer Bohrung von Umkehrtrommel (8) und/oder Umlenktrommel verankert ist.

5. Einrichtung nach einem der Ansprüche 1 bis 4, **dadurch gekennzeichnet, dass** der Körperschallsensor (10) aus Piezokeramik besteht.

6. Einrichtung nach einem der Ansprüche 1 bis 5, insbesondere in Verbindung mit Anspruch 5, **dadurch gekennzeichnet, dass** der Körperschallsensor (10) mehrschichtig ausgebildet ist.

7. Einrichtung nach einem der Ansprüche 1 bis 6, **dadurch gekennzeichnet, dass** der Prozessrechner für das opto-elektronische System (5) und der Prozessrechner für den Körperschallsensor (10) eine Prozessrechnereinheit (6) ist.

8. Einrichtung nach einem der Ansprüche 1 bis 7, **dadurch gekennzeichnet, dass** der Warnmelder für das opto-elektronische System (5) und der Warnmelder für den Körperschallsensor (10) eine Warnmeldereinheit (11) ist.

## Claims

1. Device for monitoring a conveyor installation (1), comprising:
- a conveyor belt (2) made of elastomer material with a carrying side (3) for the material being conveyed and a running side (4), the conveyor belt exhibiting in particular an embedded strength member;
- an opto-electronic system (5) which optically scans the carrying side (3) and/or the running side (4), in particular the carrying side, in that it detects damage during operation and when the conveyor belt reaches a critical state triggers an acoustic and/or optical alarm device (11) and/or automatically switches off the conveyor installation;
- a process computer (6) which is coupled to the opto-electronic system (5), in order to evaluate all the data, the process computer being in communication with the alarm device (11) and/or a drive controller (12); and
- other installation parts, namely feed drums (8), supporting rollers (9), supporting frames and possibly further components,
**characterized in that** the device is additionally equipped with at least one structure-borne noise sensor (10) which is anchored in a hole in a feed drum (8) and/or a supporting roller (9) in a force-fitting manner and detects deviations from the desired frequency, a process computer (6) which is coupled to the structure-borne noise sensor evaluating the frequency change, to be precise with simultaneous adjustment using the messages from the opto-electronic system (5), with the result that, even if the opto-electronic system itself does not report a critical state, an audible and/or visual warning notice is given and/or, in particular, the conveyor installation is automatically switched off by virtue of the fact that the process computer which is responsible for the structure-borne noise sensor is likewise in communication with an alarm device (11) and/or the drive controller (12).

2. Device according to Claim 1, **characterized in that** the structure-borne noise sensor (10) is arranged in the vicinity of the opto-electronic system (5).

3. Device according to Claim 1 or 2, **characterized in that** the hole is arranged in the centre of the feed drum (8) and/or the supporting roller (9).

4. Device according to one of Claims 1 to 3, **characterized in that** the structure-borne noise sensor (10) is anchored in a hole in the reversing drum (8) and/or the deflecting drum.

5. Device according to one of Claims 1 to 4, **characterized in that** the structure-borne noise sensor (10) is composed of piezoceramic.

6. Device according to one of Claims 1 to 5, in particular in conjunction with Claim 5, **characterized in that** the structure-borne noise sensor (10) is of multilayered design.

7. Device according to one of Claims 1 to 6, **characterized in that** the process computer for the opto-electronic system (5) and the process computer for the structure-borne noise sensor (10) are a process computer unit (6).

8. Device according to one of Claims 1 to 7, **characterized in that** the alarm device for the opto-electronic system (5) and the alarm device for the structure-borne noise sensor (10) are an alarm device unit (11).

## Revendications

1. Système de surveillance d'une installation de transport (1), comprenant :
- une courroie transporteuse (2) en un matériau élastomère et présentant un côté porteur (3) pour le matériau à transporter et un côté d'avancement (4), le produit à transporter présentant en particulier un renfort incorporé,
- un système optoélectronique (5) qui saisit optiquement le côté porteur (3) et/ou le côté d'avancement (4), en particulier le côté porteur, qui détecte les dommages en fonctionnement et qui déclenche un avertisseur acoustique et/ou optique (11) et/ou a pour effet en particulier un débranchement automatique de l'installation de transport lorsque la courroie transporteuse a atteint un état critique,
- un calculateur de processus (6) couplé au système optoélectronique (5) pour évaluer toutes les données, le calculateur de processus étant raccordé à l'avertisseur (11) et/ou à une commande d'entraînement (12),
- d'autres parties d'installation, notamment des tambours d'installation (8), des rouleaux porteurs (9), des bâtis porteurs et éventuellement d'autres composants,
**caractérisé en ce que**
le dispositif est doté en supplément d'au moins un détecteur (10) du son dans les matériaux qui est ancré en correspondance mécanique dans un alésage d'un tambour (8) de l'installation et/ou d'un rouleau porteur (9) et qui détecte des anomalies de la fréquence nominale,
**en ce qu'**un calculateur de processus (6) qui est couplé au détecteur du son dans les matériaux et qui évalue la modification de fréquence en la comparant simultanément aux messages du système optoélectronique (5) de telle sorte que même si le système optoélectronique lui-même ne transmet pas un état critique, une indication acoustique et/ou optique d'avertissement et/ou un débranchement en particulier automatique de l'installation de transport sont réalisés grâce au raccordement du calculateur de processus responsable du détecteur du son dans les matériaux à un avertisseur (11) et/ou à la commande d'entraînement (12).

2. Dispositif selon la revendication 1, **caractérisé en ce que** le détecteur (10) du son dans les matériaux est disposé à proximité du système optoélectronique (5).

3. Dispositif selon les revendications 1 ou 2, **caractérisé en ce que** l'alésage est disposé à l'intérieur du centre du tambour (8) de l'installation et/ou du rouleau porteur (9).

4. Dispositif selon l'une des revendications 1 à 3, **caractérisé en ce que** le détecteur (10) du son dans les matériaux est ancré dans un alésage du tambour de renvoi (8) et/ou du tambour de déviation.

5. Dispositif selon l'une des revendications 1 à 4, **caractérisé en ce que** le détecteur (10) du son dans les matériaux est constitué d'une piézocéramique.

6. Dispositif selon l'une des revendications 1 à 5, en particulier associé à la revendication 5,
**caractérisé en ce que** le détecteur (10) du son dans les matériaux est réalisé en plusieurs couches.

7. Dispositif selon l'une des revendications 1 à 6, **caractérisé en ce que** le calculateur de processus prévu pour le système optoélectronique (5) et le calculateur de processus prévu pour le détecteur (10) du son dans les matériaux est une unité (6) de calculateur de processus.

8. Dispositif selon l'une des revendications 1 à 7, **caractérisé en ce que** l'avertisseur prévu pour le système optoélectronique (5) et l'avertisseur prévu pour le détecteur (10) du son dans les matériaux est une unité d'avertissement (11).
